(19) Europäisches Patentamt

European Patent Office

Office européen des brevets

(11) **EP 1 395 012 A1**

(12) **EUROPEAN PATENT APPLICATION**

(43) Date of publication:
**03.03.2004 Bulletin 2004/10**

(51) Int Cl.$^7$: **H04L 27/26**, H04L 27/02,
H04L 27/34

(21) Application number: **02405742.4**

(22) Date of filing: **30.08.2002**

| | |
|---|---|
| (84) Designated Contracting States:<br>**AT BE BG CH CY CZ DE DK EE ES FI FR GB GR**<br>**IE IT LI LU MC NL PT SE SK TR**<br>Designated Extension States:<br>**AL LT LV MK RO SI**<br><br>(71) Applicant: **ABB Schweiz AG**<br>**5400 Baden (CH)**<br><br>(72) Inventors:<br> • **Dzung, Dacfey**<br>  **5430 Wettingen (CH)** | • **Von Hoff, Thomas**<br> **8049 Zürich (CH)**<br>• **Benninger, Hans**<br> **5300 Ennetturgi (CH)**<br>• **Ramseier, Stefan**<br> **5416 Kirchdorf (CH)**<br><br>(74) Representative: **ABB Patent Attorneys**<br> **c/o ABB Schweiz AG**<br> **Brown Boveri Strasse 6**<br> **5400 Baden (CH)** |

(54) **Modulation and demodulation of a combination of analog and digital signals**

(57)    In order to transmit a combination of modulated analog and digital signals in which a digital data signal ($D_I$) is modulated by means of multicarrier quadrature amplitude modulation and an analog signal ($A_I$) is modulated by means of single side band modulation (SSB), a multicarrier quadrature amplitude base modulation of the digital data signal ($D_I$) and a SSB base modulation of the analog signal ($A_I$), is performed. Corresponding components of the modulated and optionally upsampled digital ($o'_I(n), o'_Q(n)$) and analog ($s'''_I(n)\ s'''_Q(n)$) signals are added, and a carrier frequency modulation (4) of the added components is performed. In a receiver, the same carrier frequency demodulator 8 is used for the superimposed modulated analog and digital signals, which then are base band demodulated separately (6,7).

The invention reduces the total computational effort for modulating the digital and analog signals by performing the carrier frequency modulation or demodulation only once.

Fig. 2

EP 1 395 012 A1

**Description**

Field of the Invention

The invention relates to the field of digital communication. It relates to a method and a modem for modulating a combination of analog and digital signals, as described in the preamble of claim 1 and 6, respectively, and a method and a modem for demodulating a combination of analog and digital signals as described in the preamble of claim 4 and 8, respectively.

Background of the Invention

A well-known technology for transmitting analog signals over high-frequency channels is a single side band (SSB) modulation, as described e.g. in Philip F. Panter, Modulation, Noise, and Spectral Analysis, Mc-Graw-Hill, 1965, pages 180-196. One type of SSB modulation is called Weaver SSB-modulation. Its main computational complexity lies in interpolation and in up- and down-sampling stages.

For the transmission of digital data, a well-known flexible scheme is Orthogonal Frequency Division Multiplex (OFDM), also known as Discrete Multitone (DMT) modulation. Similarly, the main computational effort is invested in the up-/downsampling stages.

Some systems or applications may require the parallel transmission of SSB-modulated analog signals as well as OFDM-modulated digital data, i.e. a hybrid operation mode. Such a hybrid transmission mode is required e.g. for broadband power line communication applications, where the analog signal typically is a speech signal. A straightforward parallel implementation and operation of known SSB and OFDM systems would result in a very high overall computational load in both a modulator or transmitter and a demodulator or receiver.

Description of the Invention

It is therefore an object of the invention to create a method and a modem for modulating a combination of analog and digital signals and a method and a modem for demodulating a combination of analog and digital signals of the type mentioned initially, each having a reduced computational effort.

These objects are achieved by a method and a modem for modulating a combination of analog and digital signals, according to claim 1 and 6, respectively, and a method and a modem for demodulating a combination of analog and digital signals according to claim 4 and 8, respectively.

The inventive method for modulating a combination of analog and digital signals in which a digital data signal is modulated by means of quadrature amplitude modulation (QAM) and an analog signal is modulated by means of single side band modulation (SSB) comprises the steps of

- performing a multicarrier quadrature amplitude modulation of the digital data signal, generating an in-phase component and a quadrature component of the modulated digital signal,
- performing a SSB base modulation of at least one analog signal, generating an in-phase component and a quadrature component of the modulated analog signal,
- optionally upsampling the components of at least one of the modulated digital and the analog signal,
- adding corresponding components of the modulated and optionally upsampled digital and analog signals, and
- performing a carrier frequency modulation of the added components, adding the carrier frequency modulated components and transmitting the resulting sum signal.

The inventive method for demodulating a combination of analog and digital signals in which a received carrier frequency modulated signal is demodulated by means of multicarrier quadrature amplitude demodulation and an analog signal is demodulated by means of single side band demodulation comprises the steps of

- performing a carrier frequency demodulation of the received signal, with orthogonal carrier signals, generating in-phase and quadrature components of the received signal,
- performing a SSB base demodulation of the in-phase and quadrature components of the received signal, generating a reconstructed analog signal, and
- performing a multicarrier quadrature amplitude base demodulation of the in-phase and quadrature components of the received signal, generating a reconstructed digital signal.

The invention reduces the total computational effort for modulating the digital and analog signals by performing the carrier frequency modulation or demodulation only once.

In a preferred variant of the invention, the in-phase component and the quadrature component of the modulated analog signal are moved, i.e. shifted in frequency, to an offset frequency $f_m$. This allows to position the frequency band allocated to the transmission of the modulated analog signal to an arbitrary position with respect to the frequency band allocated to the transmission of the modulated digital signal. In particular, this allows to combine more than one modulated analog signal with the modulated digital signal, with each modulated analog signal having an associated frequency band different from the other ones.

The inventive modem comprises means for carrying out the inventive method for the modulation and/or for the demodulation of combined digital and analog signals.

Further preferred embodiments are evident from the dependent patent claims.

Brief Description of the Drawings

The subject matter of the invention will be explained in more detail in the following text with reference to preferred exemplary embodiments which are illustrated in the attached drawings, in which:

> Figure 1 shows a spectrum of a transmitted carrier frequency modulated signal;
> Figure 2 is a block diagram of a transmitter according to the invention; and
> Figure 3 is a block diagram of a receiver according to the invention.

The reference symbols used in the drawings, and their meanings, are listed in summary form in the list of reference symbols. In principle, identical parts are provided with the same reference symbols in the figures.

Detailed Description of Preferred Embodiments

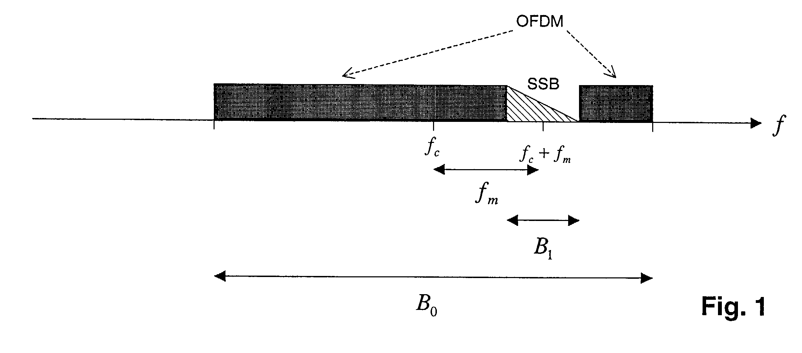

Figure 1 shows a spectrum of a transmitted carrier frequency modulated signal. An available transmission spectrum, indicated by its bandwidth $B_0$ and its carrier frequency $f_c$ is shared between a modulated digital data signal and a modulated analog signal. The analog signal $A_I$ typically represents a voice communication channel. The modulated analog signal occupies a frequency band with bandwidth $B_1$ and a middle frequency $f_c + f_m$, where $f_m$ is a frequency offset between the carrier frequency $f_c$ and the middle frequency. The modulated digital signal occupies the available transmission spectrum with the exception of the band occupied by the modulated analog signal. This is done by configuring subcarrier signals of the OFDM modulation such that the spectrum of the OFDM signal does not interfere with the band reserved for the analog signal.

According to the invention, both analog $A_I$ and digital $D_I$ payload signals are modulated or demodulated with the same carrier frequency (CF) modulator 4 or carrier frequency demodulator 8, respectively. Before being modulated by the carrier frequency modulator 4, the analog signal $A_I$ is modulated by a multicarrier quadrature amplitude base modulator 1 and the digital signal $D_I$ is modulated by a SSB base modulator 2 such that the combined effect of the multicarrier quadrature amplitude base modulator 1 followed by the carrier frequency modulator 4 amounts to an Orthogonal Frequency Division Multiplex (OFDM) modulation of the digital signal $D_I$, and the combined effect of the Single Side Band (SSB) base modulator 2 followed by the carrier frequency modulator 4 amounts to a SSB modulation of the analog signal $A_I$.

The inventive demodulation is accomplished in an analogue fashion, resulting in an OFDM and SSB demodulation having a common carrier frequency demodulator 8.

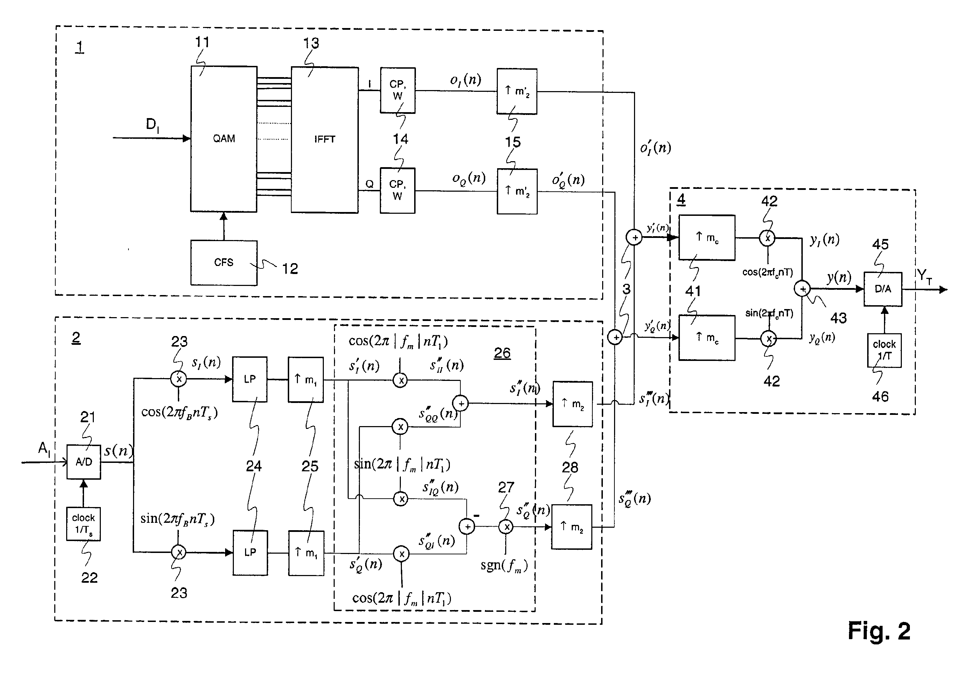

Figure 2 shows a block diagram of a transmitter according to the invention: A digital implementation of the OFDM modulation method is used, in which a QAM vectoriser 11 generates a vector of frequency coefficients in accordance with parallelised digital input bits from the digital input signal $D_I$. The available frequencies are configured according to a subcarrier configuration 12 such that a frequency band that is to be occupied by the modulated analog signal is left free, i. e. no data is mapped to those subcarriers of the OFDM signal that would interfere with the band reserved for the analog input and which is located between $f_m - B_1/2$ and $f_m + B_1/2$. From the vector of frequency coefficients, an inverse fast fourier transform 13 generates an in-phase component I and an orthogonal quadrature component Q. In block 14, each of said components is padded with a cyclic prefix and, additionally, pre- and postpadded with cyclical samples that are weighted to perform pulse-shaping, resulting in an in-phase component $o_I(n)$ and a quadrature component $o_Q(n)$ of the modulated digital signal. Optional QAM upsamplers 15 generate corresponding I and Q components $o'_I(n)$, $o'_Q(n)$ with higher sampling rates. An upsampler is implemented e. g. by the insertion of additional sampling points followed by low pass filtering.

Here, as throughout the application text, the bracketed $n$ as e.g. in $o_I(n)$, $o'_I(n)$ denotes that the respective signal is time-discrete, with $n$ as a counting variable. For simplicity of representation, the same symbol $n$ is used for all signals, but during operation, due to the up- or downsampling steps, the respective counters for $n$ for signals with different sampling rates shall count with different rates.

The analog input $A_I$ is sampled with a modulator A/D converter 21 with a sampling time $T_S$ generated by a modulator A/D converter clock 22. A digital implementation of Weaver's method for SSB modulation is extended in the following, as part of the present invention: To perform an efficient band pass filtering (with lower and upper cut-off frequencies $f_u$ and $f_o$), the sampled signal $s(n)$ is treated in SSB modulator multipliers 23 with a cos-modulator

$$s_I(n) = s(n) \cdot cos(2\pi f_B n T_s)$$

and a sin-modulator

$$s_Q(n) = s(n) \cdot \sin(2\pi f_B n T_s),$$

respectively, where $f_B = (f_u + f_o)/2$ is the mid-frequency of the desired band of the analog input. The modulations locate the desired band of the analog input symmetrically around 0 Hz, ranging from $-(f_o - f_u)/2$ to $(f_o - f_u)/2$. This allows to implement a band-pass filtering of the original signal $s(n)$ in the form of low-pass filters with cut-off frequency $(f_o - f_u)/2$, implemented in SSB modulator low pass filters 24.

Both filtered signals $s_I$ and $s_Q$, are now upsampled, in first SSB modulator upsamplers 25, by a factor $m_1$ where

$$m_1 > 2(|f_m| + (f_o - f_u)/2)T_s$$

must be satisfied to fulfil the sampling theorem in the next modulation step. Furthermore, $m_1$ is a factor of $f_cT_s$, since the following relation between the analog sampling time $T_s$ and the final carrier frequency $f_c$ is established by the intervening upsampling steps:

$$f_cT_s = m_1 \cdot m_2 \cdot m_C$$

The up-sampled versions of $s_I$ and $s_Q$ are $s_I'$ and $s_Q'$, respectively.

In a next modulation step, in a SSB modulator frequency shifter 26, the mid-frequencies of the spectrum of $s_I'$ and $s_Q'$ are moved to an offset frequency $\pm f_m$ by first computing

$$s''_{II} = s'_I \cdot \cos(2\pi|f_m|nT_1)$$

$$s''_{IQ} = s'_I \cdot \sin(2\pi|f_m|nT_1)$$

$$s''_{QI} = s'_Q \cdot \cos(2\pi|f_m|nT_1)$$

$$s''_{QQ} = s'_Q \cdot \sin(2\pi|f_m|nT_1)$$

where $T_1 = T_s/m_1$. The sum of $s''_{II}$ and $s''_{QQ}$ constitutes a signal $s''_I$ and the difference between $s''_{QI}$ and $s''_{IQ}$, multiplied by the sign of $f_m$, constitutes a signal $s''_Q$.

$$s''_I = s''_{II} + s''_{QQ}$$

$$S''_Q = \text{sgn}(f_m) \cdot (s''_{QI} - s''_{IQ})$$

Note, that $s''_Q$ incorporates the sign of $f_m$. This allows positive interference of the analog input in $y_I$ and $y_Q$ around $f_c + f_m$ and its cancellation around $f_c - f_m$. In a preferred embodiment of the invention, $f_m = 0$, i.e. the complete SSB modulation as implemented in the SSB base modulator 2 in conjunction with the carrier frequency modulator 4 corresponds to Weaver's method.

To adjust the sampling rates of the modulated analog data $s''_I$ and $s''_Q$ with those of the OFDM signals $o_I$ and $o_Q$, one of them or both are upsampled. The analog input is up-sampled in optional second SSB modulator upsamplers 28 by $m_2$, and the OFDM data in optional QAM upsamplers 15 by $m'_2$, yielding the signals $s'''_I$, $s'''_Q$, $o'_I$, and $o'_Q$, respectively. If both signal pairs are upsampled, this is done preferably with upsampling rates that do not have any factors in common. In a preferred embodiment of the invention, either $m_2$ or $m'_2$ is equal to one, i.e. the respective upsampling step is omitted. Similarly, the upsampling rate $m_1$ of the first SSB modulator upsamplers 25 is adjusted or set to one, subject to the inequality given above and by adjusting the other upsampling rates such that the input and output sampling rates of the multicarrier quadrature amplitude base modulator 1, SSB base modulator 2 and carrier frequency modulator 4 match. In a preferred embodiment of the invention, the sampling rates are chosen such that computationally expensive operations such as for narrow or steep filters like the SSB modulator low pass filters 24 are executed for signals with low sampling rates.

Then the I- and the Q-parts of the optionally upsampled modulated analog input and the OFDM signal are summed in adders 3

$$y'_I = o'_I + s'''_I$$

$$y'_Q = o'_Q + s'''_Q$$

and the respective sums $y'_I$ and $y'_Q$ are processed by a common carrier frequency modulator 4. There $y'_I$ and $y'_Q$ are upsampled by a factor $m_c = f_c/(B_0m'_2)$ and interpolated in CF modulator upsamplers 41, and modulated with the carrier frequency $f_c$ in CF modulator multipliers 42 by $\cos(2\pi f_c nT)$ and $\sin(2\pi f_c nT)$, respectively. The resulting signals, $y_I$ and $y_Q$, are summed in an adder 43 up to build the transmitted signal $y = y_I + y_Q$, which is then converted in a modulator D/A converter 45 driven by a modulator D/A converter clock 46 to an analog signal $Y_T$ for amplification and transmission.

In a preferred embodiment of the invention, the analog SSB and digital OFDM branches are amplified or multiplied separately by different constant factors before being summed in the adder 3, according to a desired approportionment of total transmission power.

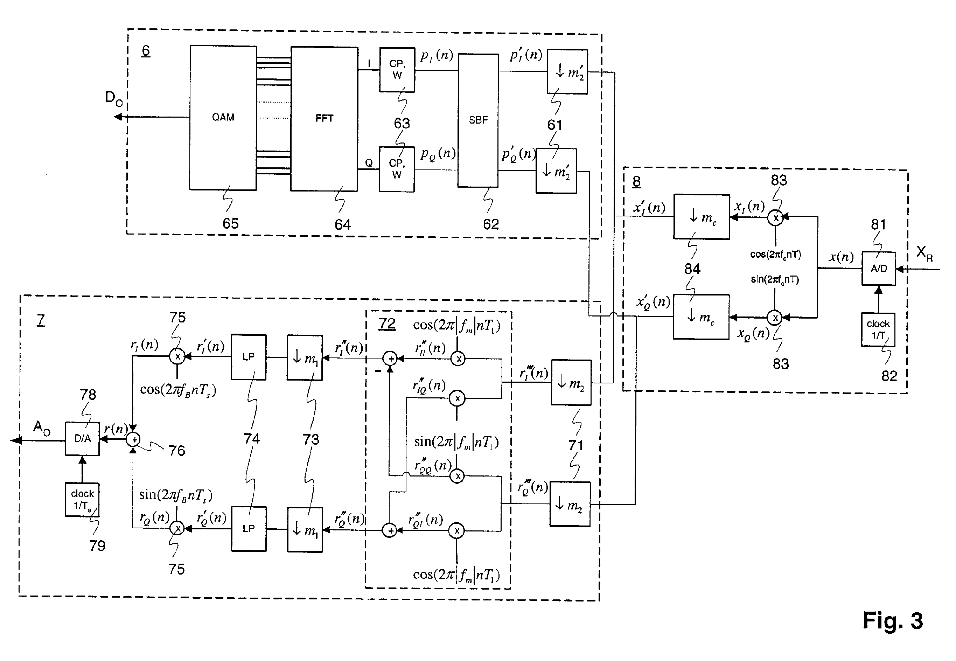

Figure 3 shows a block diagram of a receiver according to the invention: In a carrier frequency demodulator 8, the received analog signal $X_R$ is converted, in a demodulator A/D converter 81 driven by a demodulator A/D converter clock 82, to a digital signal $x(n)$. The signal $x(n)$ is, by CF demodulator multipliers 83 treated with a cos-modulator

$$x_I(n) = x(n) \cdot \cos(2\pi f_c nT)$$

and in parallel with a sin-modulator

$$x_Q(n) = x(n) \cdot \sin(2\pi f_c nT)$$

to generate the I- and Q- parts of the received signal in the base band. Both $x_I(n)$ and $x_Q(n)$ are down sampled in CF demodulator downsamplers 84. Downsampling is achieved by first low pass filtering and then sampling a signal. For downsampling, a factor $m_c = f_c /(B_0 m'_2)$ is used, resulting in signals $x'_I(n)$ and $x'_Q(n)$, which contain contributions from both digital OFDM and SSB modulated analog data.

The multicarrier quadrature amplitude base demodulator 6 for the OFDM data down samples the signals $x'_I(n)$ and $x'_Q(n)$ with QAM downsamplers 61 by $m'_2$, if $m'_2 > 1$, yielding $p'_I(n)$ and $p'_Q(n)$. This signals represent a complex signal $p'_I(n) + jp'_Q(n)$ which is band stop filtered by a band stop filter 62 in order to remove the analog signal contribution. The stop band of the asymmetric filter ranges from $f_m - B_1/2$ to $f_m + B_1/2$, and its output is a complex signal $p_I(n) + jp_Q(n)$. Its coefficients $p_I(n)$ and $p_Q(n)$ correspond to I and Q components. In blocks 63, the cyclic prefix and the pre- and postpadded pulse-shaping samples are removed, in a fast fourier transform 64 the vector of frequency coefficients is determined, and in a QAM serialiser 65 reconstructed data bits $D_o$ are determined and output.

The SSB base demodulator 7 for the <u>analog signal</u> down samples the signals $x'_I(n)$ and $x'_Q(n)$ in first SSB demodulator downsamplers 71 by $m_2$, if $m_2 > 1$, yielding $r'''_I(n)$ and $r'''_Q(n)$. Both $r'''_I(n)$ and $r'''_Q(n)$ are modulated each in a SSB demodulator frequency shifter 72 by a cos- and a sin-modulator with frequency $|f_m|$, yielding

$$r''_{II} = r'''_I \cdot \cos(2\pi|f_m|nT_1)$$

$$r''_{IQ} = r'''_I \cdot \sin(2\pi|f_m|nT_1)$$

$$r''_{QI} = r'''_Q \cdot \cos(2\pi|f_m|nT_1)$$

$$r''_{QQ} = r'''_Q \cdot \sin(2\pi|f_m|nT_1)$$

which are then superposed to build signals $r''_I(n)$ and $r''_Q(n)$:

$$r''_I = r''_{II} + r''_{QQ}$$

$$r''_Q = r''_{IQ} - r''_{QI}$$

$r''_I(n)$ and $r''_Q(n)$ are down sampled in second SSB demodulator downsamplers 73 and low-pass filtered in SSB demodulator low pass filters 74 with cut-off frequency $f_B$ to remove the QAM-data carriers. This yields signals $r'_I(n)$ and $r'_Q(n)$, which are treated in SSB demodulator multipliers 75 with the corresponding cos- and sin-modulator, respectively:

$$r_I(n) = r'_I(n) \cdot \cos(2\pi f_B nT_0)$$

$$r_Q(n) = r'_Q(n) \cdot \sin(2\pi f_B nT_0)$$

The sum of those signals $r(n) = r_I(n)+r_Q(n)$ is computed by an adder 76 and then converted in a demodulator D/A converter 78, driven by a demodulator D/A converter clock 79, to the analog output signal.

As in the modulator, downsampling rates are chosen such that an overall computational load is reduced, and preferably setting one or more of the downsampling rates $m_1$, $m_2$, $m'_2$, $m_C$ to one. The downsampling rates can, but must not necessarily be equal to corresponding upsampling rates denoted, for ease of representation, with the same symbols $m_1$, $m_2$, $m'_2$, $m_C$.

In summary, the SSB modulation of a real-valued analog signal and the complex-valued quadrature modulation of digital data can be efficiently combined by sharing interpolation/decimation filters as well as the modulation/demodulation step in the high frequency range. This results in a large reduction of the total computational complexity compared with a system consisting of two separate implementations.

The bandwidth and the offset of the analog signal within the OFDM band can be chosen by having the offset frequency $f_m$ differ from zero, i.e. the central frequency of the modulated digitalized analog signal must not be identical with the carrier frequency. In a preferred embodiment of the invention, the modulated analog signal occupies a band at the upper or lower end of the available transmission spectrum. As a result, only one boundary with respect to the modulated digital signal exists, reducing filter requirements for separating the two modulated signals. In another preferred embodiment of the invention, the modulated analog signal is located at a frequency location where associated channel characteristics are suited for the transmission of analog data, in particular for voice transmission.

In another preferred embodiment of the invention, there is more than one analog signal to be transmitted. According to the number of analog signals, a corresponding number of SSB base modulators 2 and the SSB base demodulators 7 is realized in parallel. Frequency offsets $f_m$ of these plural SSB base modulators 2 are set to different values and the carrier configuration and filtering of the OFDM signal processing is adjusted accordingly. In a transmitter, the outputs of additional SSB base modulators 2 are added by the adder 3.

For purposes of example, the following frequencies and sample rates are given:

- Sampling frequency of the modulator A/D converter 21 : 1 1/Ts = 10.667 kHz
- upsampling rate $m_1$ of the first SSB modulator upsamplers 25: 3
- upsampling rate $m_2$ of the second SSB modulator upsamplers 28: 1
- upsampling rate $m'_2$ of the QAM upsamplers 15: 1
- sampling rate of the modulated signals at the adder 3: 32 kHz
- upsampling rate $m_C$ of the CF modulator upsamplers 41 : 48
- carrier frequency $f_c$: 1.536 MHz
- bandwidth of OFDM signal: 32 kHz
- bandwidth of analog signal: 3.1 kHz
- mid-frequency offset $f_m$: 14 kHz

The transmitter and receiver are implemented with known devices and technologies for digital signal processing such as one or more programmable microprocessors, digital signal processors, ASIC's, FPGA's, discrete devices etc...

List of designations

1 multicarrier quadrature amplitude base modulator
2 SSB base modulator
3 adder, adding means
4 carrier frequency (CF) modulator
6 multicarrier quadrature amplitude base demodulator
7 SSB base demodulator
8 carrier frequency demodulator
11 QAM vectoriser
12 subcarrier configuration
13 inverse fast fourier transform (IFFT)
14 cyclic prefix, windowing
15 QAM upsamplers
21 modulator analog to digital (A/D) converter
22 modulator A/D converter clock
23 SSB modulator multipliers
24 SSB modulator low pass filters
25 first SSB modulator upsamplers
26 SSB modulator frequency shifter
27 multiplier
28 second SSB modulator upsamplers
41 CF modulator upsamplers
42 CF modulator multipliers
43 adder
45 modulator digital to analog (D/A) converter
46 modulator D/A converter clock
61 QAM downsamplers
62 stop band filter
63 remove cyclic prefix (window?)
64 fast fourier transform (FFT)
65 QAM serialiser
71 first SSB demodulator downsamplers

72 SSB demodulator frequency shifter
73 second SSB demodulator downsamplers
74 SSB demodulator low pass filters
75 SSB demodulator multipliers
76 adder
78 demodulator digital to analog (D/A) converter
79 demodulator D/A converter clock
81 demodulator analog to digital (A/D) converter
82 demodulator A/D converter clock
83 CF demodulator multipliers
84 CF demodulator downsamplers

**Claims**

1. A method for modulating a combination of analog and digital signals in which a digital data signal $(D_l)$ is modulated by means of multicarrier quadrature amplitude modulation (QAM) and an analog signal $(A_l)$ is modulated by means of single side band modulation (SSB),
   **characterized in that** the method comprises the steps of

   a) performing a multicarrier quadrature amplitude base modulation of the digital data signal $(D_l)$, generating an in-phase component $(o_l(n))$ and a quadrature component $(o_Q(n))$ of the modulated digital signal,

   b) performing a SSB base modulation of at least one analog signal $(A_l)$, generating an in-phase component $(s''_l(n))$ and a quadrature component $(S_Q''(n))$ of the modulated analog signal,

   c) optionally upsampling the components of at least one of the modulated digital $(o_l(n), o_Q(n))$ and the analog signal $(s''_l(n), s''_Q(n))$,

   d) adding corresponding components of the modulated and optionally upsampled digital $(o'_l(n), o'_Q(n))$ and analog $(s'''_l(n)\ s'''_Q(n))$ signals, and

   e) performing a carrier frequency modulation of the added components, adding the carrier frequency modulated components and transmitting the resulting sum signal $(Y_T)$.

2. The method according to claim 1, wherein the in-phase component $(s''_l(n))$ and the quadrature component $(s''_Q(n))$ of the modulated analog signal are moved to an offset frequency $(f_m)$.

3. The method according to claim 2, wherein more that one analog signal is modulated by a SSB base modulation, and the in-phase component $(s''_l(n))$ and the quadrature component $(s''_Q(n))$ of each modulated analog signal are moved to an offset frequency associated with the corresponding analog signal.

**4.** A method for demodulating a combination of analog and digital signals in which a received carrier frequency modulated signal ($X_R$) is demodulated by means of multicarrier quadrature amplitude demodulation and an analog signal ($A_I$) is demodulated by means of single side band demodulation (SSB) **characterized in that** the method comprises the steps of

a) performing a carrier frequency demodulation of the received signal ($X_R$), with orthogonal carrier signals, generating in-phase ($x'_I(n)$) and quadrature $(x'_Q(n))$ components of the received signal,

b) performing a SSB base demodulation of the in-phase ($x'_I(n)$) and quadrature $(x'_Q(n))$ components of the received signal, generating a reconstructed analog signal ($A_o$), and

c) performing a multicarrier quadrature amplitude base demodulation of the in-phase $(x'_I(n))$ and quadrature $(x'_Q(n))$ components of the received signal, generating a reconstructed digital signal ($D_o$).

**5.** The method according to claim 4, wherein the SSB base demodulation comprises moving the in-phase ($x'_I(n)$) and quadrature $(x'_Q(n))$ components of the received signal by an offset frequency ($f_m$).

**6.** A modem for modulating a combination of analog and digital signals in which a digital data signal ($D_I$) is modulatable by means of quadrature amplitude modulation (QAM) and an analog signal ($A_I$) is modulatable by means of single side band modulation (SSB) **characterized in that** the modem comprises

a) means (1) for performing a multicarrier quadrature amplitude base modulation of the digital data signal ($D_I$) and for generating an in-phase component ($o_I(n)$) and a quadrature component $(o_Q(n))$ of the modulated digital signal,

b) means (2) for performing a SSB base modulation of at least one analog signal ($A_I$) and for generating an in-phase component $(s''_I(n))$ and a quadrature component $(s''_Q(n))$ of the modulated analog signal,

c) optional means for upsampling the components of at least one of the modulated digital $(o_I(n), o_Q(n))$ and the analog signal

$$(s''_I(n), s''_Q(n)),$$

d) means (3) for adding corresponding components of the modulated and optionally upsampled digital $(o'_I(n), o'_Q(n))$ and analog $(s'''_I(n)$ $s'''_Q(n),)$ signals, and

e) means (4) for performing a carrier frequency modulation of the added components, adding the carrier frequency modulated components and transmitting the resulting sum signal ($Y_T$).

**7.** The modem according to claim 6, comprising means for shifting the in-phase component ($s''_I(n)$) and the quadrature component $(s''_Q(n))$ of the modulated analog signal to an offset frequency ($f_m$).

**8.** A modem for demodulating a combination of analog and digital signals in which a received carrier frequency modulated signal ($X_R$) is demodulatable by means of multicarrier quadrature amplitude demodulation and an analog signal ($A_I$) is demodulatable by means of single side band demodulation (SSB) **characterized in that** the modem comprises

a) means (8) performing a carrier frequency demodulation of the received signal ($X_R$), with orthogonal carrier signals, generating in-phase ($x'_I(n)$) and quadrature ($x'_Q(n)$) components of the received signal,

b) means (7) for performing a SSB base demodulation of the in-phase ($x'_I(n)$) and quadrature $(x'_Q(n))$ components of the received signal, generating a reconstructed analog signal (Ao), and

c) means (6) for performing a multicarrier quadrature amplitude base demodulation of the in-phase $(x'_I(n))$ and quadrature $(x'_Q(n))$ components of the received signal, generating a reconstructed digital signal ($D_o$).

**9.** The modem according to claim 8, where the SSB base demodulator (7) comprises means for moving the in-phase $(x'_I(n))$ and quadrature $(x'_Q(n))$ components of the received signal by an offset frequency $(f_m)$.

EP 1 395 012 A1

OFDM

SSB

$f$

$f_c$

$f_c + f_m$

$f_m$

$B_1$

$B_0$

**Fig. 1**

Fig. 2

EP 1 395 012 A1

Fig. 3

**European Patent Office**

**EUROPEAN SEARCH REPORT**

Application Number

EP 02 40 5742

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | US 6 430 227 B1 (BAIRD JEFFREY SCOTT ET AL) 6 August 2002 (2002-08-06) * abstract * * column 1, line 5 - line 26 * * claim 1 * --- | 1-9 | H04L27/26 H04L27/02 H04L27/34 |
| A | US 5 956 624 A (KUMAR DEREK D ET AL) 21 September 1999 (1999-09-21) * abstract * * column 1, line 11 - line 29 * * column 1, line 66 - column 2, line 11 * * figure 1 * --- | 1-9 | |
| A | US 5 444 697 A (LEUNG CYBIL S ET AL) 22 August 1995 (1995-08-22) * abstract * * column 1, line 64 - column 2, line 5 * ----- | 1-9 | |

TECHNICAL FIELDS SEARCHED (Int.Cl.7)

H04L

The present search report has been drawn up for all claims

| Place of search | Date of completion of the search | Examiner |
|---|---|---|
| THE HAGUE | 15 January 2003 | Reilly, D |

**ANNEX TO THE EUROPEAN SEARCH REPORT
ON EUROPEAN PATENT APPLICATION NO.**                    EP 02 40 5742

This annex lists the patent family members relating to the patent documents cited in the above-mentioned European search report.
The members are as contained in the European Patent Office EDP file on
The European Patent Office is in no way liable for these particulars which are merely given for the purpose of information.

15-01-2003

| Patent document cited in search report | | Publication date | Patent family member(s) | | Publication date |
|---|---|---|---|---|---|
| US 6430227 | B1 | 06-08-2002 | AU | 2795199 A | 18-10-1999 |
| | | | BR | 9909174 A | 05-12-2000 |
| | | | CA | 2326318 A1 | 07-10-1999 |
| | | | CN | 1298583 T | 06-06-2001 |
| | | | EP | 1072112 A2 | 31-01-2001 |
| | | | JP | 2002510897 T | 09-04-2002 |
| | | | WO | 9950980 A2 | 07-10-1999 |
| US 5956624 | A | 21-09-1999 | AU | 3094495 A | 09-02-1996 |
| | | | WO | 9602101 A1 | 25-01-1996 |
| | | | US | 5745525 A | 28-04-1998 |
| | | | US | 5903598 A | 11-05-1999 |
| | | | US | 5949813 A | 07-09-1999 |
| | | | US | 6014407 A | 11-01-2000 |
| | | | ZA | 9505666 A | 07-01-1997 |
| US 5444697 | A | 22-08-1995 | AU | 7454794 A | 28-02-1995 |
| | | | WO | 9505042 A1 | 16-02-1995 |